# EUROPÄISCHE PATENTSCHRIFT

(11) **EP 1 602 158 B1**
(45) Veröffentlichungstag und Bekanntmachung des Hinweises auf die Patenterteilung: **13.09.2006**
(21) Anmeldenummer: 04717648.2
(22) Anmeldetag: 05.03.2004
(51) Int. Cl.: H02G 3/08

(54) **BAUSATZ FÜR EINE STECKVORRICHTUNGS-KOMBINATION**
KIT FOR A COMBINATION OF PLUG-IN DEVICES
ENSEMBLE DE PIECES POUR UNE COMBINAISON DE DISPOSITIFS ENFICHABLES

(30) Priorität: 10.03.2003 DE 10310630
(43) Veröffentlichungstag der Anmeldung: 07.12.2005
(73) Patentinhaber: AMAD - Mennekes Holding GmbH & Co. KG, 57399 Kirchhundem (DE)
(72) Erfinder: LAZZARO, Volker, 57399 Kirchhundem (DE); EICHER, Helmut, 57482 Wenden (DE)
(74) Vertreter: Beckmann, Jürgen
(86) Internationale Anmeldenummer: PCT/EP2004/050261
(87) Internationale Veröffentlichungsnummer: WO 2004/082089

(56) Entgegenhaltungen:
- EP-A- 0 448 545
- EP-A- 1 209 785
- US-A- 5 910 642

## Beschreibung

Die Erfindung betrifft Bausätze für eine Steckvorrichtungen-Kombination. Bekannte Steckvorrichtungen- bzw. Steckdosen-Kombinationen enthalten ein Gehäuse, das an seiner Oberseite Aussparungen für den Einbau von Steckvorrichtungen bzw. Steckdosen aufweist und zum Beispiel für die Befestigung an einer Wand eingerichtet ist. Falls in dem Gehäuse auch Sicherungsautomaten untergebracht werden sollen, hat es zusätzlich eine größere rechteckige Aussparung für den Einbau eines schwenkbaren transparenten Fensters. Die Herstellung einer derartigen Steckvorrichtungen-Kombination erfordert mehrere Schritte, zu denen das Kunststoffspritzgießen des Gehäuses, das Anschäumen von Dichtungen, das Ausfräsen von Öffnungen für Steckvorrichtungen im Gehäuseoberteil, das Ausfräsen einer Öffnung für ein Fenster, die Vormontage des Fensters sowie die Endmontage der gewünschten Steckvorrichtungen gehören. Alle genannten Schritte müssen durchlaufen werden, wenn eine bestimmte Kombination (zum Beispiel mit einer vorgegebenen Anzahl, Anordnung und Amperezahl von Steckdosen und/oder Sicherungen) hergestellt werden soll. Die Produktion kleiner Serien bzw. ein Wechsel zwischen verschiedenen Kombinationen ist daher verhältnismäßig aufwändig und mit einer langen Vorlaufzeit behaftet.

Aus der EP 1 209 785 A1 ist ein Installationskasten für elektrische Einrichtungen wie beispielsweise Steckdosen, Schalter und dergleichen bekannt, wobei der Installationskasten in einen Kabelkanal oder eine ähnliche Einbauöffnung einzusetzen ist. Der Installationskasten besteht aus im Querschnitt U-förmigen Gehäusemodulen, mit denen ein beliebig langer, kanalförmiger Kasten für die Aufnahme verschiedener elektrischer Bauteile geschaffen werden kann, wobei die genannten Bauteile an speziellen Haltern der Gehäusemodule befestigt werden. Im Rahmen der Endmontage wird auf jedes Gehäusemodul an der Oberseite ein Deckel aufgesetzt, welcher beispielsweise die Außenform einer Steckdose oder einer Schalterfassung besitzen kann.

Des Weiteren offenbart die US 5 910 642 spezielle Dosen zur Installation von Telefonkabel-Verteilungen, wobei die Dosen aus einem Unterteil und einem hiermit verbindbaren, aufklappbaren Deckelteil bestehen.

Vor diesem Hintergrund war es Aufgabe der vorliegenden Erfindung, Mittel zur flexibleren und kostengünstigen Herstellung von Steckvorrichtungen-Kombinationen bereitzustellen.

Diese Aufgabe wird durch einen Bausatz für eine Steckvorrichtungen-Kombination mit den Merkmalen des Anspruchs 1 bzw. des Anspruchs 4 gelöst. Vorteilhafte Ausgestaltungen sind in den Unteransprüchen enthalten.

Gemäß einem ersten Aspekt der Erfindung betrifft diese einen Bausatz für eine Steckvorrichtungen-Kombination, welcher mindestens jeweils einen der folgenden Bestandteile enthält:
a) Ein Gehäuse mit einem Gehäuseunterteil, einem Gehäuseoberteil sowie mindestens einer Einbauöffnung, die im genannten Gehäuseoberteil ausgebildet ist. Das Gehäuse kann dabei wie bei bekannten Steckdosen-Kombinationen dimensioniert und mit Mitteln zur Befestigung an einer Wand ausgestattet sein.
b) Eine Einbauplatte, die für eine Montage in der vorstehend genannten Einbauöffnung des Gehäuses eingerichtet ist, wobei die Einbauöffnung im montierten Zustand der Einbauplatte verschlossen wird, und die ferner dazu eingerichtet ist, dass an ihr selbst mindestens eine Steckvorrichtung (z.B. ein Stecker oder vorzugsweise eine Steckdose) montiert werden kann. Vorzugsweise können an der Einbauplatte mehrere gleichartige oder unterschiedliche Steckvorrichtungen montiert werden, wodurch sich eine optimale Platzausnutzung erreichen lässt.
c) Darüber hinaus enthält der Bausatz eine als Einbaufenster ausgebildete Einbauplatte, wobei das Einbaufenster mindestens teilweise aus einem transparenten Material besteht und für eine Montage in der Einbauöffnung des Gehäuses eingerichtet ist.

Mit Hilfe des beschriebenen Bausatzes können sehr flexibel und mit geringerem Produktionsaufwand bzw. Produktionsvorlauf unterschiedliche Steckvorrichtungen-Kombinationen hergestellt werden. Für alle gewünschten Kombinationen kann nämlich auf gleichartige Grundmodelle des Gehäuses zurückgegriffen werden, in deren Einbauöffnung(en) dann die zu den gewünschten Steckvorrichtungen passenden Einbauplatten zu montieren sind. Für die individuelle Bestückung mit Steckvorrichtungen verschiedener Anzahl, Art und/oder Amperezahl müssen daher nurmehr Einbauplatten in den in Frage kommenden Kombinationen hergestellt und bevorratet werden. Falls das Gehäuse mehrere Einbauöffnungen aufweist, können allein durch die verschiedene Platzierung unterschiedlicher Einbauplatten zahlreiche unterschiedliche Steckvorrichtungen-Kombinationen hergestellt werden. Ein weiterer wichtiger Vorteil des Bausatzes besteht darin, dass er auch eine spezielle Einbauplatte in Form eines Einbaufensters umfasst. Montagetechnisch wird daher ein Fenster, das zum Beispiel Zugang zu Sicherungsautomaten bietet, genauso behandelt wie die "normalen" Einbauplatten mit Steckvorrichtungen. Der Einbau und die Anordnung eines Fensters erfordert somit weder eine spezielle Ausbildung des Gehäuses noch besondere Herstellungsschritte. Ein Fenster kann vielmehr in jeder Einbauöffnung des Gehäuses vorgesehen werden, in welcher auch Steckvorrichtungen montiert werden können.

Bei einer bevorzugten Ausbildung des Einbaufensters weist dieses einen Rahmen auf, an welchem mittels eines Scharniergelenks ein Fensterflügel schwenkbeweglich angebracht ist. Der Rahmen kann dann die für Einbauplatten vorgesehenen Befestigungsmöglichkeiten tragen, so dass er wie eine "normale" Einbauplatte am Gehäuse montiert werden kann.

Gemäß einer optionalen Weiterbildung des Einbaufensters weisen der Rahmen und der Fensterflügel zusammenwirkende Rastelemente auf, welche in der geschlossenen und/oder in einer geöffneten Stellung des Fensterflügels einrasten und dessen dabei eingenommene Position stabilisieren. In der geöffneten Stellung des Fensterflügels kann dann zum Beispiel eine Montage oder Bedienung von hinter dem Fenster befindlichen Einrichtungen erfolgen, ohne dass das Fenster hierbei störend in den Weg steht.

Gemäß einem zweiten Aspekt der Erfindung betrifft diese einen weiteren Bausatz für eine Steckvorrichtungen-Kombination, wobei dieser weitere Bausatz optional auch Merkmale des oben beschriebenen Bausatzes gemäß dem ersten Aspekt der Erfindung aufweisen kann. Der weitere Bausatz ist dadurch gekennzeichnet, dass er mindestens die folgenden Bestandteile enthält:
a) Mindestens zwei verschieden ausgestaltete Gehäuse mit jeweils einem Gehäuseunterteil, einem Gehäuseoberteil sowie mindestens einer Einbauöffnung, die jeweils gleichartig im Gehäuseoberteil ausgebildet ist. Die Gehäuse können insbesondere unterschiedliche Abmessungen haben, um für die Aufnahme unterschiedlich vieler bzw. großer Steckvorrichtungen bei minimalem Raumbedarf eingerichtet zu sein. Die geforderte Gleichartigkeit der Einbauöffnungen in den verschiedenen Gehäusen bedeutet, dass diese insbesondere hinsichtlich ihrer montagerelevanten Abmessungen und vorzugsweise auch hinsichtlich der zugehörigen Befestigungsmittel identisch sind.
b) Mindestens eine Einbauplatte, die für eine Montage in den genannten Einbauöffnungen der mindestens zwei Gehäuse eingerichtet ist, wobei an der Einbauplatte mindestens eine Steckvorrichtung montiert werden kann und wobei die Einbauöffnung im montierten Zustand der Einbauplatte verschlossen wird. Aus Gründen der Platzausnutzung ist es wiederum bevorzugt, wenn an der Einbauplatte mehrere Steckvorrichtungen montiert werden können.

Durch einen Bausatz der vorstehend definierten Art wird bei geringem Produktionsvorlauf eine einfache und flexible Herstellung sehr unterschiedlicher Steckvorrichtungen-Kombinationen mit wenigen bis vielen Steckvorrichtungen möglich. Der Vorteil des Bausatzes liegt darin, dass trotz Verwendung unterschiedlicher Gehäusegrößen auf dieselben Einbauplatten zurückgegriffen werden kann, da die Einbauöffnungen in den Gehäusen jeweils gleichartig sind.

Vorzugsweise besitzen die Gehäuse des Bausatzes die Grundform eines Quaders, wobei die Kantenlänge mindestens eines Gehäuses des Bausatzes gleich der Summe der Kantenlängen von mindestens zwei anderen Gehäusen des Bausatzes ist. Diese Bedingung wird insbesondere dann erfüllt, wenn sich mindestens eine Kantenlänge eines jeden Gehäuses des Bausatzes im Wesentlichen als ein ganzzahliges Vielfaches einer Basislänge ausdrücken lässt. Durch die beschriebene Größenstufung der quaderförmigen Gehäuse ist eine platzsparende, effektive und optisch ansprechende Montage mehrerer Steckvorrichtungen-Kombinationen nebeneinander möglich, da diese in einem regelmäßigen Raster angeordnet werden können. Insbesondere kann ein einzelnes langes Gehäuse bündig abschließend neben zwei oder mehreren kürzeren Gehäusen angebracht werden.

Nachfolgend werden optionale Weiterbildungen der beiden oben definierten Varianten eines Bausatzes näher erläutert.

Die Bausätze enthalten jeweils Einbauplatten, die für die Montage von Steckvorrichtungen eingerichtet sind. Zu diesem Zweck können die Einbauplatten mindestens eine Aussparung für die Anbringung einer Steckvorrichtung aufweisen. Darüber hinaus können die Bausätze auch geschlossene bzw. "blinde" Einbauplatten enthalten, die im Wesentlichen nur dem Verschließen einer nicht mit Steckvorrichtungen zu bestückenden Einbauöffnung eines Gehäuses dienen.

Gemäß einer anderen Weiterbildung des Bausatzes weisen die Einbauplatten an einer Seite Mittel für eine schraubenlose Ankopplung an das Gehäuse auf. Hierdurch kann die Anzahl der zur Befestigung einer Einbauplatte benötigten Schrauben auf die Hälfte reduziert werden, was einen entsprechenden Zeitgewinn bei der Montage, mit sich bringt. Bei den genannten Mitteln kann es sich z.B. um ein Scharnier handeln, durch weiches die Einbauplatte schwenkbeweglich am Gehäuse gelagert wird. Gemäß einer anderen Ausgestaltung der Mittel weisen die Einbauplatten an einer Seite Vorsprünge auf, die mit korrespondierenden Vertiefungen an der Einbauöffnung des Gehäuses zusammenwirken, um die Einbauplatte einseitig im Gehäuse zu verankern. Alternativ können natürlich auch an der Einbauplatte Vertiefungen und an der Einbauöffnung korrespondierende Vorsprünge vorgesehen sein. Durch die Vorsprünge und Vertiefungen wird ein Einhakmechanismus verwirklicht, der eine besonders einfache und schnelle Montage einer Einbauplatte ermöglicht.

Des Weiteren können zur Befestigung einer Einbauplatte in einer Einbauöffnung an mindestens einer Seite der Einbauöffnung des Gehäuses Löcher (Bohrungen) mit einem Innengewinde vorgesehen sein, welche mit entsprechenden Durchgangslöchem in der Einbauplatte fluchten, wenn Letztere montiert ist. Die Einbauplatte kann dann einfach und zuverlässig mit Schrauben in den Löchern des Gehäuses festgeschraubt werden.

Optional können die Einbauplatten für einen geneigten Einbau einer Steckvorrichtung eingerichtet sein. Das heißt, dass die in der Einbauplatte montierte Steckvorrichtung mit ihrer Achse in einem schrägen Winkel (zwischen 0° und 90°) zur Grundebene der Einbauplatte steht. Die Einbauplatte kann zu diesem Zweck eine insgesamt geneigte innere Fläche oder einen Kragen mit einem in einer geneigten Ebene liegenden Rand aufweisen.

Das in den Bausätzen verwendete Gehäuse ist vorzugsweise mehrteilig. Insbesondere kann es aus einem Gehäuseoberteil, in welchem die Einbauöffnungen vorgesehen sind, und einem Gehäuseunterteil bestehen, wobei das Gehäuseoberteil reversibel (d.h. lösbar) mit dem Gehäuseunterteil verbindbar ist. Ein solcher zweiteiliger Gehäuseaufbau aus einer Unterschale und einer Oberschale ermöglicht z.B. eine separate Befestigung des Gehäuseunterteils an einer Wand und die Vorinstallation elektrischer Einrichtungen darin, welche anschließend durch Befestigen des Gehäuseoberteils abgedeckt werden können.

Weiterhin kann das Gehäuse auch zwei Gehäuseobertelle enthalten, die an verschiedenen Seiten eines vorzugsweise rahmenförmigen Gehäusemittelteils befestigbar sind. Auf diese Weise kann eine auf der Vorder- und Rückseite mit Steckvorrichtungen bestückbare Steckvorrichtungen-Kombination erhalten werden, die sich zum Beispiel für eine hängende Montage in einem Raum eignet.

Zwischen allen miteinander verbundenen Teilen einer Steckvorrichtungen-Kombination, insbesondere zwischen den Teilen Steckvorrichtung/Einbauplatte, Einbauplatte/Gehäuse, Fensterflügel/Rahmen, Gehäuseoberteil/Gehäuseunterteil und Gehäuseoberteil/Gehäusemittelteil sind vorzugsweise Dichtmittel vorgesehen, so dass die Kombination entsprechend den einschlägigen Vorschriften staub- bzw. wasserdicht ist.

Im Folgenden wird die Erfindung mit Hilfe der Figuren beispielhaft erläutert. Es zeigt:
- Fig. 1: eine Explosionsansicht eines Bausatzes für eine Steckvorrichtungen-Kombination;
- Fig. 2: ein Programm verschiedener Gehäuseoberteile mit ein bis vier Einbauöffnungen;
- Fig. 3a: eine geschlossene Einbauplatte;
- Fig. 3b: eine perspektivische Ansicht einer entlang der Linie IV-IV von Figur 3a geschnittenen Einbauplatte;
- Fig. 4: eine Einbauplatte mit geneigten kragenförmigen Ansätzen für Steckvorrichtungen;
- Fig. 5: eine Einbauplatte mit fünf Aussparungen für Steckvorrichtungen;
- Fig. 6: eine Einbauplatte mit einer geneigten Fläche;
- Fig. 7: eine als Einbaufenster ausgebildete Einbauplatte;
- Fig. 8: eine perspektivische Ansicht eines Schnittes durch ein Gehäuseoberteil mit zwei Einbauöffnungen;
- Fig. 9: eine endmontierte Steckvorrichtungen-Kombination mit zwei Steckdosen und einem Griff;
- Fig. 10: eine endmontierte, zweiseitige Steckvorrichtungen-Kombination für eine Hängemontage.

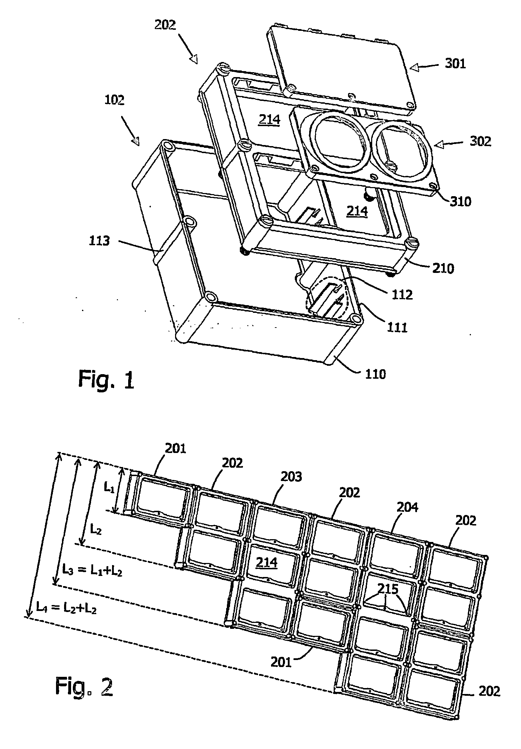

In Figur 1 sind in einer Explosionsdarstellung die Komponenten eines erfindungsgemäßen Bausatzes für eine Steckvorrichtungen-Kombination bzw. Steckdosen-Kombination gemäß der vorliegenden Erfindung dargestellt. Zu dem Bausatz gehören ein Gehäuseunterteil 102, ein Gehäuseoberteil 202, sowie zwei Einbauplatten 301 und 302.

Das Gehäuseunterteil 102 ist im Wesentlichen quaderförmig mit einer offenen Oberseite. In den Eckpunkten weist das Gehäuseunterteil integral ausgebildete Befestigungshülsen 110 auf, die an ihrer Oberseite mit einem Innengewinde versehen sind. Die Befestigungshülsen 110 sind im Übrigen vorzugsweise innen durchgehend offen und an der Rückfläche des Gehäuseunterteils 102 verengt, so dass sich das Gehäuseunterteil durch in die Befestigungshülsen 110 eingesetzte Schrauben an einer Wand anschrauben lässt. Bei der in Figur 1 dargestellten beispielhaften Gehäusegröße sind ferner in der Mitte der längeren Seite des Gehäuseunterteils 102 jeweils weitere Befestigungshülsen 113 vorgesehen.

Im inneren des Gehäuseunterteils 102 können in bekannter Weise die gewünschten Elektroinstallationen untergebracht werden. Zu diesem Zweck sind an der Innenwand des Gehäuseunterteils 102 zum Beispiel Vorsprünge 112 für eine Einrast-Halterung von genormten Hutschienen vorgesehen.

Das Gehäuseoberteil 202 weist ebenfalls die Grundform eines Quaders mit offener Unterseite auf und kann passend mit dem Gehäuseunterteil 102 zusammengesetzt werden. Die beiden Gehäuseteile 202 und 102 werden dabei durch Schrauben miteinander verbunden, die durch Befestigungshülsen 210 am Gehäuseoberteil verlaufen und in das Innengewinde der Befestigungshülsen 110, 113 am Gehäuseunterteil 102 eingreifen. Zwischen Gehäuseunterteil 102 und Gehäuseoberteil 202 sind ferner Dichtmittel vorgesehen, um eine staub- und wasserdichte Verbindung der Gehäuseteile zu erreichen. Die Dichtmittel können zum Beispiel am oberen Rand des Gehäuseunterteils 102 in Form einer umlaufenden Dichtung 111 angespritzt und/oder in Zweikomponenten-Bauweise angeformt sein.

Das Gehäuseoberteil 202 weist an seiner Oberseite zwei im Wesentlichen rechteckige und gleich große Aussparungen 214 ("Einbauöffnungen") auf, in welche die geschlossene Einbauplatte 301 bzw. die mit zwei schräggestellten Kragen versehene Einbauplatte 302 eingesetzt werden können. Auf die Befestigung der Einbauplatten wird später noch im Einzelnen eingegangen.

Die in Figur 1 dargestellten Komponenten sind nur ein Teil eines umfangreicheren Bausatzes, welcher durch eine quasi beliebige Kombination seiner Bestandteile die einfache und flexible Herstellung von Steckvorrichtungen-Kombinationen unterschiedlicher Art erlaubt. Figur 2 zeigt diesbezüglich ein bevorzugtes Programm an Gehäuseoberteilen 201-204, zu denen jeweils korrespondierende Gehäuseunterteile (nicht dargestellt) gehören. Das genannte Programm umfasst:
- ein Gehäuseoberteil 201 mit einer Einbauöffnung 214;
- ein Gehäuseoberteil 202 mit zwei Einbauöffnungen 214;
- ein Gehäuseoberteil 203 mit drei Einbauöffnungen 214;
- ein Gehäuseoberteil 204 mit vier Einbauöffnungen 214.

Die Abmessungen der verschiedenen Gehäuseoberteile und die Positionierung der Befestigungshülsen sind dabei in einem bestimmten Rastermaß gewählt, so dass sich mehrere kleine Gehäuseoberteile aneinanderfügen lassen und dabei eine Gesamtlänge erreichen, die genau der Gesamtlänge eines entsprechenden größeren Gehäuseoberteils entspricht. So lassen sich beispielsweise das Einer-Gehäuseoberteil 201 (Kantenlänge L₁) und das Zweier-Gehäuseoberteil 202 (Kantenlänge L₂) so aneinander setzen, dass ihre Gesamtlänge L₂+L₁ gleich der Kantenlänge L₃ des Dreier-Gehäuseoberteils 203 ist, das heißt es ist L₃ = L₂+L₁. Die korrespondierenden Befestigungshülsen der jeweiligen Gehäuse liegen dabei auf einer fluchtenden Linie. In ähnlicher Weise lassen sich zwei Zweier-Gehäuseoberteile 202 so aneinander setzen, dass ihre gesamte Kantenlänge gleich der Kantenlänge des Vierer-Gehäuses 204 ist: L₄ = L₂+L₂.

Obiges Rasterverhalten der Gehäuse wird Insbesondere dann erreicht, wenn eine Kante dieser Gehäuse sich als ganzzahliges Vielfaches einer Basislänge ausdrücken lässt. Zum Beispiel könnte L₁ die Basislänge sein und L₂ = 2L₁, L₃ = 3L₁, L₄ = 4L₁ gelten.

Aus Gründen der Platzoptimierung und der Einhaltung von bestehenden Normmaßen kann jedoch auch eine (leichte) Abweichung von diesem strengen Rastermaß vorliegen, so dass L₂ = (2L₁ - Δ) ist, wobei Δ größer oder kleiner als Null oder gleich Null sein kann. Dennoch lässt sich gemäß Figur 2 eine Teilrasterung erreichen, wenn die Längendifferenz Δ auch in den größeren Gehäuseformen 203, 204 ein- oder mehrfach zusätzlich zum Vielfachen der Basislänge L₁ vorhanden ist, z.B. gemäß L₃ = (3L₁ - Δ), L₄ = (4L₁ - 2Δ).

Die Rasterung der Gehäusemaße und Hülsenpositionen erleichtert die Montage, da dieselben Befestigungspunkte nutzbar sind, und führt zudem zu einem optisch ansprechenden, harmonischen Aussehen mehrerer nebeneinander montierter Kombinationen.

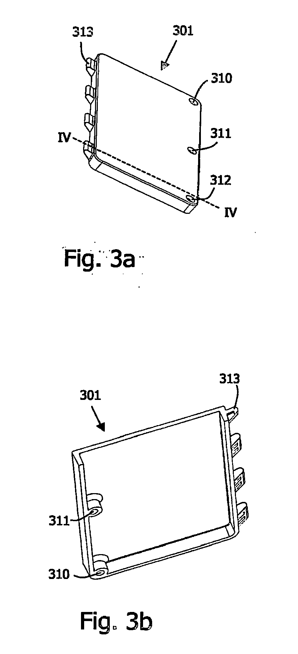

Figur 3a zeigt in einer perspeldiviechen Ansicht eine geschlossene Einbauplette 301. Diese kann dazu verwendet werden, eine nicht benötigte Einbauöffnung 214 eines Gehäuseoberteils zu verschließen. Figur 3b zeigt einen Schnitt entlang der Linie IV-IV durch die Einbauplatte 301 von Figur 3a. Die Einbauplatte 301 weist an einer Längsseite drei Durchgangsöffnungen 310, 311 und 312 auf, die mit entsprechenden Löchern 215 (Figur 2) mit Innengewinde in den Gehäuseoberteilen 201, 202, 203, 204 fluchten. Durch Einsetzen von Schrauben in die Löcher 310-312 kann die Einbauplatte 301 somit an einem Gehäuseoberteil festgeschraubt werden. Vorzugsweise schließen die verwendeten Schrauben dabei bündig bzw. unterbündig mit der Oberseite der Einbauplatte 301 ab, um eventuellen Aufbauten nicht störend im Wege zu stehen.

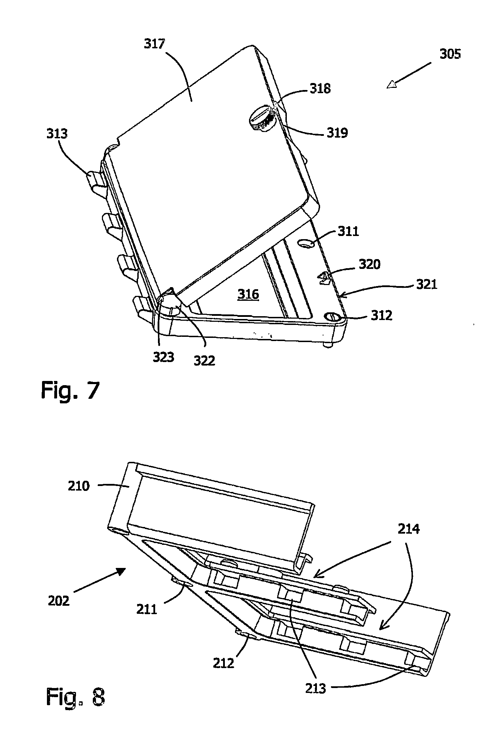

An der den Löchern 310-312 gegenüberliegenden Seite der Einbauplatte 301 sind (im dargestellten Beispiel vier) Einhakvorsprünge 313 ausgebildet. Wie aus dem Schnitt von Figur 3b erkennbar ist, sind diese Vorsprünge 313 leicht zur Oberseite der Einbauplatte 301 hin geneigt. Die Vorsprünge 313 können bei der Montage der Einbauplatte 301 in korrespondierende Taschen 213 (Figur 8) am Rand der Einbauöffnung 214 eines Gehäuseoberteils eingesetzt bzw. eingehakt werden, wodurch sich eine vereinfachte Schnellmontage der Einbauplatte ergibt. Lediglich an einer Seite der Einbauplatte 301 müssen noch Schrauben in den Löchern 310-312 festgezogen werden. Wenn die Steckvorrichtungen-Kombination an einer Wand angebracht werden soll, werden die Einbauplatten vorzugsweise so montiert, dass die Einhakvorsprünge 313 jeweils an der oben gelegenen Seite liegen, so dass sie die primäre Auszugsbelastung aufnehmen können.

Statt der Einhakvorsprünge 313 könnte auch ein Schamiermechanismus zwischen Einbauplatte und Gehäuseoberteil vorgesehen sein (nicht dargestellt). Auch hierdurch ließe sich die Montage beschleunigen, da gegenüber einer rundum erfolgenden Schraubbefestigung nur noch die Hälfte der Schrauben anzuziehen ist.

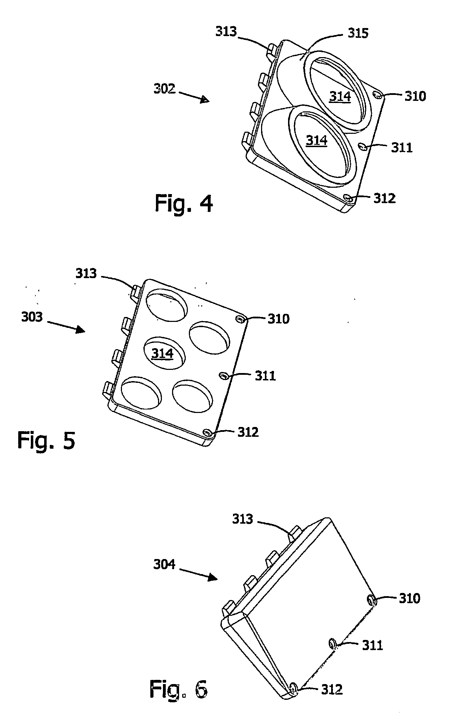

Figur 4 zeigt eine Einbauplatte 302, welche zwei hochstehende, geneigte Kragen 315 ausweist. In den beiden Öffnungen 314 der Kragen können Steckvorrichtungen (nicht dargestellt) wie zum Beispiel Steckdosen befestigt werden. Entsprechend der Neigung der Kragen 315 können die Steckvorrichtungen auch dann schräg zur Gehäuseoberfläche montiert werden, wenn sie selbst nicht für eine derartige geneigte Anbringung ausgelegt sind. Die Einbauplatte 302 weist im Übrigen wiederum Einhakvorsprünge 313 sowie Durchgangsöffnungen 310-312 für eine Einhak- bzw. Schraubmontage auf.

Figur 5 zeigt ein weiteres Beispiel einer ebenen Einbauplatte 303, welche fünf kreisförmige Aussparungen 314 für den Einsatz von Steckvorrichtungen aufweist. Im Übrigen ist auch diese Einbauplatte 303 mit Durchgangslöchem 310-312 und Einhakvorsprüngen 313 versehen.

Figur 6 zeigt eine pultförmige Einbauplatte 304 mit einer hochstehend-schrägen Fläche. Die Einbauplatte 304 hat die Form eines Prismas mit dreieckiger Grundfläche und einer offenen Unterseite. Alternativ könnte die geneigte Fläche auch vertieft sein. In der geneigten Fläche können Aussparungen (nicht dargestellt) zur Befestigung von Steckvorrichtungen vorgesehen werden, welche dann im endmontierten Zustand eine entsprechende Lage annehmen.

Die Montage von Steckvorrichtungen in den Aussparungen 314 der Einbauplatten 302, 303 kann beispielsweise durch Aufschrauben einer Überwurfmutter von der Innenseite des Gehäuses her auf den Körper einer Steckvorrichtung erfolgen (vgl. die Anmeldung DE 102 06 063 "Anbau-Steckvorrichtung", deren Inhalt vollumfänglich in die vorliegende Anmeldung aufgenommen wird). Ebenso ist es jedoch auch möglich, die Ränder der Aussparungen 314 mit einem Innengewinde zu versehen, in weiches unmittelbar ein Steckvorrichtungselement mit einem korrespondierenden Außengewinde eingeschraubt werden kann. Vorzugsweise finden dabei Gewinde Verwendung, die mit weniger als einer Vollumdrehung einen stabilen, sicheren Sitz des Steckvorrichtungselementes an der Einbauplatte erreichen (vgl. die Anmeldung DE 103 01 879 "Steckvorrichtungselement mit Montagegewinde", deren Inhalt vollumfänglich in die vorliegende Anmeldung aufgenommen wird).

Neben den in den Figuren 3 bis 6 dargestellten Beispielen können im Rahmen des Bausatzes nahezu beliebige weitere Ausgestaltungen von Einbauplatten verwendet werden. Diese können sich zum Beispiel hinsichtlich der Anzahl, Position und Größe der Aussparungen für verschiedene Steckvorrichtungen unterscheiden. Durch die Verwendung unterschiedlicher Einbauplatten in Verbindung mit den standardisierten Gehäuseoberteilen und Gehäuseunterteilen kann in einfacher und kostengünstiger Weise ein breites Programm an Steckvorrichtungen-Kombinationen bereitgestellt werden.

Eine zusätzliche Steigerung der Flexibilität des Bausatzes wird durch Einbauplatten erreicht, die als Einbaufenster ausgebildet sind. Diesbezüglich zeigt Figur 7 eine spezielle Ausgestaltung eines Einbaufensters 305, welches aus einem Rahmen 321 mit einem daran angebrachten transparenten Fensterflügel 317 besteht. Der Rahmen 321 weist in gleicher Weise wie die "normalen" Einbauplatten 301, 302, 303 der Figuren 3 bis 6 auf einer Seite Durchgangslöcher 311, 312 und auf der gegenüberliegenden Seite Einhakvorsprünge 313 auf. Das Einbaufenster 305 kann daher in derselben Weise wie die anderen Einbauplatten in der Einbauöffnung 214 eines Gehäuseoberteils montiert werden.

Der Rahmen 321 weist ferner an zwei benachbarten Ecken zwei Gelenkköpfe 322 auf, in denen der Fensterflügel 317 mit zwei Gelenkzapfen (nicht dargestellt) schwenkbar eingesetzt ist. Der Fensterflügel 317 ist in Figur 7 in einer halb geöffneten Stellung dargestellt. Die Gelenkköpfe 322 weisen ferner an ihrer Außenseite Einkerbungen 323 auf, in welche ein Vorsprung am Fensterflügel 317 bei Erreichen der zugehörigen Öffnungs- oder Schließstellung einrastet, so dass der Fensterflügel in dieser Stellung arretiert wird. Da dieser Rastmechanismus unmittelbar am Gelenk 322 ausgebildet ist, verursacht er nur minimale Störkräfte für die "normale" Schwenkbewegung des Fensterflügels 317.

Des Weiteren sind an der den Gelenkköpfen 322 abgewandten Seite des Rahmens 321 Rastböcke 320 vorgesehen, hinter welchen entsprechende Restnesen (nicht dargestellt) des Fensterflügels 317 in der geschlossenen Stellung des Fensterflügels einrasten. Darüber hinaus kann ein fester Verschluss des Fensterflügels 317 durch das Festschrauben einer Rändelschraube 318 erfolgen, wobei diese vorzugsweise durch die mittige Durchgangsöffnung 311 des Fensterrahmens bis in die Gewindebohrung des zugehörigen Gehäuseoberteils (nicht dargestellt) verläuft und gleichzeitig für eine Befestigung des Fensterflügels 317 am Rahmen 321 und des Rahmens 321 am Gehäuseoberteil sorgt. Die Vorderseite des Fensterflügels 317 kann ferner eine Griffmulde 319 aufweisen, um ein leichteres Öffnen zu ermöglichen. Zwischen dem Fensterflügel 317 und dem Fensterrahmen 321 sind vorzugsweise Dichtungselemente (nicht dargestellt) vorgesehen.

Durch die gleichartige Anbringungsweise des Einbaufensters 305 und der sonstigen Einbauplatten 301-303 ist es möglich, die Gehäuseoberteile 201-204 mit nur einem Typ von Einbauöffnung 214 zu versehen, da jede Einbauöffnung wahlweise für den Einsatz eines Fensters oder von Steckvorrichtungen verwendet werden kann. Zwischen einer Einbauplatte 301-305 und einem Gehäuseoberteil werden dabei vorzugsweise Dichtmittel wie zum Beispiel angespritzte oder angeformte Dichtungen vorgesehen, um eine staub- und wasserdichte Verbindung zu garantieren.

In Figur 8 ist perspektivisch ein Schnitt durch ein Gehäuseoberteil 202 mit zwei Einbauöffnungen 214 dargestellt. Erkennbar sind dabei insbesondere die je vier an jeweils einer Seite der Einbauöffnungen 214 vorgesehenen Einhaktaschen 213, in welche die korrespondierenden Einhakvorsprünge 313 der Einbauplatten 301-305 eingesetzt werden können. Die Einhaktaschen 213 sind ganz im Gehäuseinneren unterhalb des Randes der Einbauöffnungen 214 angeordnet, so dass der Rand von der Oberseite her durch eine umlaufende Dichtung hermetisch nach außen abgedichtet werden kann.

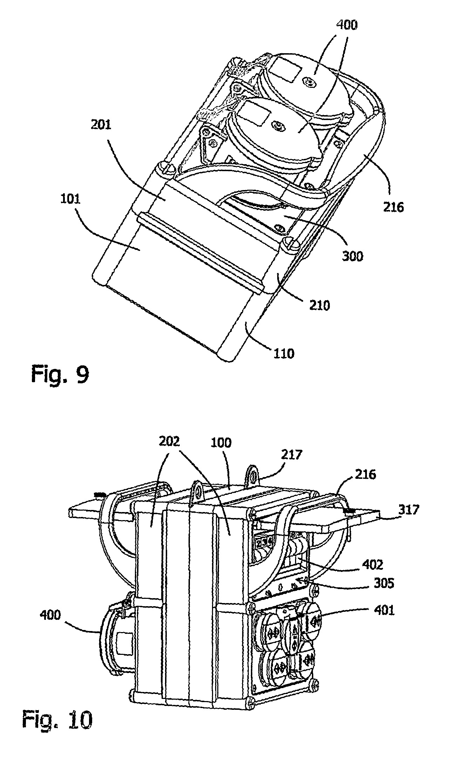

Figur 9 zeigt eine beispielhafte endmontierte Steckdosen-Kombination mit einem Gehäuseunterteil 101, einem Einer-Gehäuseoberteil 201 und einer Einbauplatte 300, an der zwei Steckdosen 400 montiert sind. Des Weiteren ist ein Griff bzw. Bügel 216 erkennbar, der am Gehäuseoberteil 201 befestigt ist und u.a. einen Rammschutz für die Vorrichtung bildet.

Figur 10 zeigt eine zweiseitige Steckvorrichtungen-Kombination. Diese besteht aus zwei Zweier-Gehäuseoberteilen 202, in welchen verschiedene Steckdosen 400, 401 sowie Sicherungsautomaten 402 angebracht sind. Die Sicherungsautomaten 402 befinden sich jeweils hinter einem Einbaufenster 305. Ferner sind an den Gehäuseoberteilen Griffe 216 angebracht. Die Gehäuseoberteile 202 sind Rücken an Rücken angeordnet und über ein rahmenförmiges Gehäusemittelteil 100 miteinander verbunden. Das Gehäusemittelteil 100 weist an seiner Oberseite Ösen 217 auf, über welche die Steckdosen-Kombination zum Beispiel hängend montiert werden kann.

### Bezugszeichenliste

- 100: Gehäusemittelteil
- 101, 102: Gehäuseunterteile
- 110: Eck-Befestigungshülse
- 111: Dichtung
- 112: Hutschienen-Halterung
- 113: mittlere Befestigungshülse

- 201 - 204: Gehäuseoberteile mit ein bis vier Einbauöffnungen
- 210-212: Befestigungshülsen
- 213: Einhaktaschen
- 214: Einbauöffnungen
- 215: Gewindebohrungen
- 216: Griff
- 217: Öse

- 300: Einbauplatte
- 301: geschlossene Einbauplatte
- 302: Zweier-Einbauplatte
- 303: Fünfer-Einbauplatte
- 304: Pultförmige Einbauplatte
- 305: Einbaufenster

- 310 - 312: Durchgangslöcher
- 313: Einhakvorsprünge
- 314: Aussparung
- 315: Kragen
- 316: Fensteröffnung
- 317: Fensterflügel
- 318: Rändelschraube
- 319: Griffmulde
- 320: Rastbock
- 321: Rahmen
- 322: Gelenkkopf
- 323: Einkerbung

- 400, 401: Steckdose
- 402: Sicherungsautomat

## Patentansprüche

1. Bausatz für eine Steckvorrichtungen-Kombination, enthaltend
a) ein Gehäuse mit einem Gehäuseunterteil (101, 102), mit einem Gehäuseoberteil (201-204), sowie mit mindestens einer Einbauöffnung (214), die im Gehäuseoberteil (201-204) ausgebildet ist;
b) eine Einbauplatte (302, 303), die für eine Montage in der Einbauöffnung (214) des Gehäuses eingerichtet ist, wobei an der Einbauplatte mindestens eine Steckvorrichtung (400, 401) montiert werden kann und wobei die Einbauöffnung (214) im montierten Zustand der Einbauplatte verschlossen wird;
und
c) eine als Einbaufenster (305) ausgebildete Einbauplatte, wobei das Einbaufenster (305) zumindest teilweise aus einem transparenten Material (317) besteht und für eine Montage in der Einbauöffnung (214) des Gehäuses eingerichtet ist.

2. Bausatz nach Anspruch 1,
**dadurch gekennzeichnet, dass** das Einbaufenster (305) einen Rahmen (321) aufweist, an welchem mittels eines Scharniergelenkes (322) ein Fensterflügel (317) schwenkbeweglich angeordnet ist.

3. Bausatz nach Anspruch 2,
**dadurch gekennzeichnet, dass** der Rahmen (321) und der Fensterflügel (317) zusammenwirkende Rastelemente (323) aufweisen, welche in der geschlossenen und/oder in der geöffneten Stellung des Fensterflügels einrasten.

4. Bausatz für eine Steckvorrichtungen-Kombination, insbesondere Bausatz nach mindestens einem der Ansprüche 1 bis 3, enthaltend
a) mindestens zwei verschieden ausgestaltete Gehäuse (100-102; 201-204), welche jeweils aufweisen: ein Gehäuseunterteil (101, 102), ein Gehäuseoberteil (201-204), sowie mindestens eine Einbauöffnung (214), die bei allen Gehäusen gleichartig im Gehäuseoberteil (201-204) ausgebildet ist;
b) eine Einbauplatte (302, 303), die für eine Montage in den Einbauöffnungen (214) der mindestens zwei Gehäuse eingerichtet ist, wobei an der Einbauplatte mindestens eine Steckvorrichtung (400, 401) montiert werden kann und wobei die Einbauöffnung (214) im montierten Zustand der Einbauplatte verschlossen wird.

5. Bausatz nach Anspruch 4,
**dadurch gekennzeichnet, dass** die Gehäuse (100-102; 201-204) im Wesentlichen quaderförmig sind, wobei die Kantenlänge mindestens eines Gehäuses (203, 204) gleich der Summe der Kantenlängen von mindestens zwei anderen Gehäusen (201,202) ist.

6. Bausatz nach mindestens einem der Ansprüche 1 bis 5,
**dadurch gekennzeichnet, dass** die Einbauplatte (301-305) an einer Seite Mittel für eine schraubenlose Ankopplung an das Gehäuse aufweist, vorzugsweise ein Scharnier oder Vorsprünge (313) und/oder Vertiefungen, die in Zusammenwirkung mit korrespondierenden Vertiefungen (213) bzw. Vorsprüngen an der Einbauöffnung (214) des Gehäuses (201-204) die Einbauplatte (301-305) einseitig am Gehäuse verankern.

7. Bausatz nach mindestens einem der Ansprüche 1 bis 6,
**dadurch gekennzeichnet, dass** an mindestens einer Seite der Einbauöffnung (214) des Gehäuses (201-204) Löcher (215) mit Innengewinde vorgesehen sind, die mit Durchgangslöchem (310-312) in der Einbauplatte (301-305) fluchten.

8. Bausatz nach mindestens einem der Ansprüche 1 bis 7,
**dadurch gekennzeichnet, dass** die Einbauplatte (302, 304) für einen geneigten Einbau einer Steckvorrichtung eingerichtet ist.

9. Bausatz nach mindestens einem der Ansprüche 1 bis 8,
**dadurch gekennzeichnet, dass** das Gehäuse aus einem Gehäuseoberteil (201-204) und einem Gehäuseunterteil (101, 102) besteht, die reversibel miteinander verbindbar sind.

10. Bausatz nach mindestens einem der Ansprüche 1 bis 9,
**dadurch gekennzeichnet, dass** das Gehäuse zwei Gehäuseoberteile (202) und ein Gehäusemittelteil (100) enthält, wobei die Gehäuseoberteile (202) an verschiedenen Seiten des Gehäusemittelteils (100) befestigbar sind.

## Claims

1. Kit for a combination of plug-in devices, comprising
a) a housing with a lower housing part (101, 102), with an upper housing part (201-204), and with at least one mounting opening (214) in the upper housing part (201-204);
b) a mounting plate (302, 303) constructed for installation in the mounting opening (214) of the housing, wherein at least one plug-in device (400, 401) can be mounted to the mounting plate and wherein the mounting opening (214) is closed when the mounting plate (302, 303) is mounted;
and
c) a mounting plate configured as window module (305), wherein the window module (305) is made at least partially of transparent material (317) and intended for installation in the mounting opening (214) of the housing.

2. Kit according to claim 1, **characterized in that** the window module (305) has a frame (321) for swingable arrangement of a window sash (317) by means of a hinge joint (322).

3. Kit according to claim 2, **characterized in that** the frame (321) and the window sash (317) include cooperating locking elements (323) which lock, when the window sash is closed and/or open.

4. Kit for a combination of plug-in devices, in particular kit according to at least one of the claims 1 to 3, comprising
a) at least two housings (100-102; 201-204) of different design which each comprise: a lower housing part (101, 102), an upper housing part (201-204), and at least one mounting opening (214) in the upper housing part (201-204) that is of identical design in all housings;
b) a mounting plate (302, 303) which is constructed for installation in the mounting openings (214) of the at least two housings, wherein at least one plug-in device can be mounted to the mounting plate and wherein the mounting opening (214) is closed when the mounting plate (302, 303) is mounted.

5. Kit according to claim 4, **characterized in that** the housings (100-102; 201 - 204) have a substantial cuboidal configuration, with the edge length of at least one housing (203, 204) corresponding to the sum of the edge lengths of at least two other housings (201, 202).

6. Kit according to at least one of the claims 1 to 5, **characterized in that** the mounting plate (301-305) has one side provided with means for screwless attachment to the housing, preferably a hinge or projections (313) and/or depressions which anchor the mounting plate (301-305) on one side of the housing in cooperation with complementary depressions (213) or projections at the mounting opening (214) of the housing (201-204).

7. Kit according to at least one of the claims 1 to 6, **characterized in that** holes (215) with internal thread are provided on at least one side of the mounting opening (214) of the housing (201-204) in alignment with through holes (310-312) in the mounting plate (301-305).

8. Kit according to at least one of the claims 1 to 7, **characterized in that** the mounting plate (301, 304) is constructed for a slanted installation of a plug-in device.

9. Kit according to at least one of the claims 1 to 8, **characterized in that** the housing is comprised of an upper housing part (201-204) and a lower housing part (101, 102) which are reversibly interconnectable.

10. Kit according to at least one of the claims 1 to 9, **characterized in that** the housing comprises two upper housing parts (202) and a central housing part (100), with the upper housing parts (202) being securable to various sides of the central housing part (100).

## Revendications

1. Ensemble de pièces pour réaliser une combinaison de dispositifs enfichables, comprenant :
a) un boîtier doté d'une partie inférieure de boîtier (101, 102), d'une partie supérieure de boîtier (201-204) et d'au moins une ouverture d'encastrement (214) ménagée dans la partie supérieure de boîtier (201-204) ;
b) une plaquette encastrable (302, 303) qui est conçue pour être montée dans l'ouverture d'encastrement (214) du boîtier, au moins un dispositif enfichable (400, 401) pouvant être monté sur la plaquette encastrable, et l'ouverture d'encastrement (214) étant fermée lorsque la plaquette encastrable est montée ;
et
c) une plaquette encastrable réalisée en tant que fenêtre encastrable (305), la fenêtre encastrable (305) étant au moins en partie composée d'un matériau transparent (317) et étant conçue pour être montée dans l'ouverture d'encastrement (214) du boîtier.

2. Ensemble de pièces selon la revendication 1, **caractérisé en ce que** la fenêtre encastrable (305) présente un cadre (321) sur lequel un battant de fenêtre (317) est monté de façon pivotante au moyen d'une articulation à charnière (322).

3. Ensemble de pièces selon la revendication 2, **caractérisé en ce que** le cadre (321) et le battant de fenêtre (317) présentent des éléments d'enclenchement (323) coopérant entre eux, qui s'enclenchent lorsque le battant de fenêtre est dans la position fermée et/ou ouverte.

4. Ensemble de pièces pour réaliser une combinaison de dispositifs enfichables, notamment ensemble de pièces selon au moins l'une des revendications 1 à 3, comprenant :
a) au moins deux boîtiers (100-102 ; 201-204) conçus de manière différente, qui présentent chacun une partie inférieure de boîtier (101, 102), une partie supérieure de boîtier (201-204) et au moins une ouverture d'encastrement (214) qui est réalisée de façon identique dans la partie supérieure de boîtier (201-204) de tous les boîtiers ;
b) une plaquette encastrable (302, 303) qui est conçue pour être montée dans les ouvertures d'encastrement (214) des deux boîtiers au moins, au moins un dispositif enfichable (400, 401) pouvant être monté dans la plaquette encastrable, et l'ouverture d'encastrement (214) étant fermée lorsque la plaquette encastrable est montée.

5. Ensemble de pièces selon la revendication 4, **caractérisé en ce que** les boîtiers (100-102 ; 201-204) ont essentiellement la forme d'un parallélépipède, la longueur de côté d'au moins un boîtier (203, 204) étant égale à la somme des longueurs de côté d'au moins deux autres boîtiers (201, 202).

6. Ensemble de pièces selon au moins l'une des revendications 1 à 5, **caractérisé en ce que** la plaquette encastrable (301-305) présente sur un côté des moyens pour l'accoupler sans vis au boîtier, de préférence une charnière ou des saillies (313) et/ou des encoches qui, en coopérant avec respectivement des encoches (213) et des saillies correspondantes de l'ouverture d'encastrement (214) du boîtier (201-204), immobilisent unilatéralement la plaquette encastrable (301-305) sur le boîtier.

7. Ensemble de pièces selon au moins l'une des revendications 1 à 6, **caractérisé en ce que** des trous taraudés (215) sont prévus sur au moins un côté de l'ouverture d'encastrement (214) du boîtier (201-204), qui sont alignés sur des trous de passage (310-312) dans la plaquette encastrable (301-305).

8. Ensemble de pièces selon au moins l'une des revendications 1 à 7, **caractérisé en ce que** la plaquette encastrable (302, 304) est conçue pour y encastrer en biais un dispositif enfichable.

9. Ensemble de pièces selon au moins l'une des revendications 1 à 8, **caractérisé en ce que** le boîtier est composé d'une partie supérieure de boîtier (201-204) et d'une partie inférieure de boîtier (101, 102) qui peuvent être assemblées entre elles de manière réversible.

10. Ensemble de pièces selon au moins l'une des revendications 1 à 9, **caractérisé en ce que** le boîtier comprend deux parties supérieures de boîtier (202) et une partie centrale de boîtier (100), les parties supérieures de boîtier (202) pouvant être fixées sur différents côtés de la partie centrale de boîtier (100).
